**Europäisches Patentamt**

**European Patent Office**

**Office européen des brevets**

(19)

(11) Veröffentlichungsnummer: **0 132 653**
**B1**

(12) # EUROPÄISCHE PATENTSCHRIFT

(45) Veröffentlichungstag der Patentschrift:
14.10.87

(21) Anmeldenummer: **84107886.8**

(22) Anmeldetag: **05.07.84**

(51) Int. Cl.⁴: **G 06 K 15/10, B 41 J 3/02**

(54) Schaltungsanordnung zum Erzeugen von Zeichen oder grafischen Mustern über Ausgabeeinheiten von Mosaikdruckeinrichtungen.

(30) Priorität: **08.07.83 DE 3324758**

(43) Veröffentlichungstag der Anmeldung:
**13.02.85 Patentblatt 85/7**

(45) Bekanntmachung des Hinweises auf die Patenterteilung:
**14.10.87 Patentblatt 87/42**

(84) Benannte Vertragsstaaten:
**DE FR GB IT NL**

(56) Entgegenhaltungen:
**EP-A-0 040 313**
**FR-A-2 254 190**
**US-A-3 330 208**
**US-A-3 921 164**
**US-A-4 321 610**

(73) Patentinhaber: **Siemens Aktiengesellschaft Berlin und München, Wittelsbacherplatz 2, D-8000 München 2 (DE)**

(72) Erfinder: **Wiedemer, Manfred, Dipl.- Ing., Adalperostrasse 5, D-8045 Ismaning (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung gemäß dem Oberbegriff des Patentanspruches 1.

Druckende Ausgabegeräte von Datenverarbeitungsanlagen werden mit steigendem Bedarf nach universeller Zeichengestaltung (Groß-Kleinschreibung, Bar-Code-Druck, Graphik usw.) immer häufiger als Matrix-Drucker ausgebildet. Gegenüber Typendruckern können bei entsprechender Auflösung und bei Verwendung von ladbaren elektronisch gespeicherten Zeichensätzen nahezu beliebige Schriftzeichen auf Matrixdruckern erstellt werden.

Die Auflösung eines Druckzeichens ist bei Matrixdruckern einerseits durch die Größe der kleinsten druckbaren Einheit - einem Punkt - bzw deren technischen Realisierbarkeit und geometrische Anordnung, andererseits durch die maximale Schreibfrequenz bei gegebener Druckleistung und durch den Speicheraufwand für das elektronische Abbild eines Zeichens begrenzt. Zur Erreichung einer guten Druckqualität ist eine hohe Auflösung unbedingt erforderlich, insbesondere bei Druckzeichen, die Schrägen oder Kurven innerhalb der Zeichenform erfordern. Eine geringe Auflösung kann zu einer stufenförmigen Darstellung einzelner Schriftelemente führen.

Aus der DE-OS 24 57 884 ist ein Mosaikdrucker mit zeilenweise und spaltenweisen angeordneten, durch Binärsignale des Zeichengenerators erregbaren Drucktypen in Matrixanordnung bekannt, der eine Verzögerungseinrichtung zum Verzögern der Binärsignale in aufeinanderfolgenden Zeilen enthält.

Durch die Verzögerungseinrichtung läßt sich eine Schrägstellung der gedruckten Zeichen erreichen.

Es wird weiters in der US-PS 3 330 208 ein serieller Matrixdrucker beschrieben, bei dem sich die Betätigungssignale für die Druckelemente in Abhängigkeit von der gewünschten Schrägstellung des abzudruckenden Zeichens verschieden lange verzögern lassen.

US-A-4 321 610 beschreibt einen Matrixdrucker, der beim Ausdruck einzelne Zeichenelemente verschieben kann, um die horizontale Auflösung zu erhöhen und somit die Schriftqualität zu verbessern. Dieser Drucker arbeitet mit einer festen Verschiebung und erfordert zwei Speichereinheiten, um nicht verschiebbare und verschiebbare Zeichenelemente zu speichern. Beim Ausdruck eines Zeichens werden die Zeichenelemente dann entweder aus der ersten Speichereinheit oder aus der zweiten Speichereinheit gelesen.

Um die Schriftqualität zu verbessern, ist es ferner bekannt (vgl. EP-A-40 313) einzelne Zeichenelemente beim Ausdruck individuell zu verschieben. Auch bei dieser Lösung ist eine erhöhte Speicherkapazität erforderlich, um die individuellen Verschiebungen festzuhalten.

Aufgabe der Erfindung ist es eine Schaltungsanordnung zum Erzeugen von Zeichen oder graphischen Mustern über Ausgabeeinheiten von Mosaikdruckeinrichtung oder nach dem Rasterprinzip arbeitenden Geräten bereitzustellen, die es ermöglicht, die horizontale Auflösung eines Schriftzeichens ohne Erhöhung der Schreibfrequenz und ohne zusätzliche Speicherkapazität zu erhöhen und damit die Schriftqualität zu verbessern.

Diese Aufgabe wird bei einer Schaltungsanordnung der eingangs genannten Art gemäß dem kennzeichnenden Teil des ersten Patentanspruches gelöst.

Weitere vorteilhafte Ausführungsformen der Erfindung sind in den abhängigen Ansprüchen gekennzeichnet.

Durch die Organisation der Zeichenelemente in durch Gruppenkennzeichen aufweisende Zeichenfeldern bei denen die einzelnen Zeichenelemente durch Kennungszeichen gekennzeichnet sind, ist es möglich, durch Verwendung einer entsprechenden Erkennungsanordnung über die Adressier- und Steuereinheit einzelne Zeichenelemente beim Ausdruck beliebig zu verschieben und damit das Schriftbild zu optimieren. Berücksichtigt man, daß die meisten Schriftzeichen nicht sämtliche Speicherzellen eines Zeichenfeldes belegen - so werden vor allem die Randspalten und Randzeilen eines Zeichenfeldes wegen der erforderlichen Zwischenräume zum nächsten Zeichen bzw. in der nächsten Zeile selten durch abzudruckende Punkte belegt - so können diese Randspalten und/oder Randzeilen zur Speicherung der Kennungszeichen verwendet werden.

Eine besonders einfache Ansteuermöglichkeit für die einzelnen Zeichenelemente ergibt sich dadurch, daß man die Zeichenfelder in eine erste Gruppe von Zeichenfeldern mit verschiebbaren Zeichenelementen und eine Zweite Gruppe von Zeichenfeldern mit nicht verschiebbaren Zeichenelementen unterteilt und die beiden Zeichenfeldergruppen durch ein Gruppenkennzeichen unterscheidet. Als Gruppenzeichen kann dabei das erste Binärzeichen der ersten Zeile und Spalte des Zeichenfeldes dienen.

Durch diese Art der Belegung können auch die Randspalten und Randzeilen in den Zeichenfeldern zur Belegung mit abzudruckenden Zeichenelementen verwendet werden, bei denen sonst innerhalb des Zeichenfeldes keine verschiebbaren Zeichenelemente vorgesehen sind.

Derartige Zeichenfelder mit nicht verschiebbaren Zeichenelementen sind in jedem Fall notwendig um z. B. durchgehende Striche, Kurvenzüge oder Sonderzeichen von größerem Format darzustellen, die sich über mehrere Schreibstellen oder Zeilen erstrecken.

Verwendet man Zeichenfelder bei denen je Spalte höchstens ein Zeichenelement binär gespeichert ist, wobei als Binärzeichen die erste Zeile jeder Spalte dient, so läßt sich in Verbindung mit einem ersten Druckregister und einem zweiten Verzögerungsdruckregister die Schaltungsanordnung besonders einfach ausgestalten. Beim Abdruck wird dabei das Zeichenfeld spaltenweise ausgelesen und in den Druckregistern zwischengespeichert. Beim Erkennen eines durch ein Kennzeichen gekennzeichneten zu verschiebenden Zeichenelementes wird dann das Verzögerungsdurckregister ausgelesen, wobei bei einem Zeichenelement das nicht zu korrigieren ist, das Druckregister.

Gemäß einer Ausführungsform der Erfindung lassen sich die zwei Gruppen von Zeichenfeldern leicht dadurch unterscheiden, daß man ein mit dem Matrixspeicher verknüpfendes erstes Spaltenregister anordnet, in das die erste Spalte eines jeden Zeichenfeldes eingelesen wird. Durch einfache Verknüpfung der ersten Speicherzellen mit dem Spaltentakt der ersten Spalte läßt sich ein Signal zur Erkennung des als Gruppenkennzeichen verwendeten Binärzeichens generieren.

Eine Ausführungsform der Erfindung ist in den Zeichnungen dargestellt und wird im Folgenden beispielsweise näher beschrieben. Es zeigen

Fig. 1 eine schematische Darstellung eines Zeichenfeldes mit zugehöriger Belegung duch Zeichenelemente,

Fig. 2 eine schematische Darstellung einer Ausführungsform der erfindungsgemäßen Schaltungsanordnung in einem Laserdrucker.

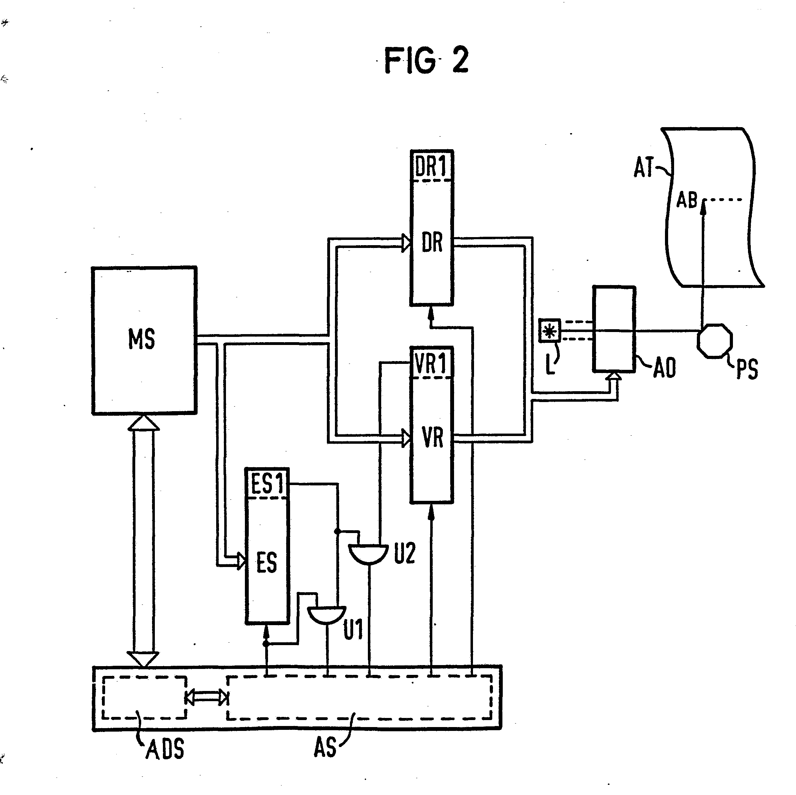

Ein hier nicht im einzelnen beschriebener Laserprinter, wie er z. B. aus der US-PS 4 311 723 bekannt ist enthält, wie aus der Fig. 2 ersichtlich, eine Laserquelle L, einen zugehörigen akustooptischen Ablenker AO einen Polygon-Spiegel PS und den zugehörigen Aufzeichnungsträger AT. Das eigentliche Ansteuermittel für den Laserprinter bildet der akustooptische Ablenker AO der im Prinzip dem Druckkopf einer Nadeldruckeinrichtung entspricht. Die Ansteuerung dieses akustooptischen Ablenkers erfolgt über die im folgenden näher beschriebene erfindungsgemäße Schaltungsanordnung.

Sie besteht im wesentlichen aus einem Matrixspeicher MS in dem die einzelnen darstellbaren Zeichen als strich- oder musterbeschreibende binäre Zeichenfolgen einzeln in matrixartig aufgebauten Zeichenfeldern gleicher Größe als Spalten- bzw. zeilenweise angeordnete Zeichenelemente binär gespeichert sind. Dieser Matrixspeicher MS wird angesteuert von einer Adressier- und Steuereinheit AS die in bekannter Weise über einen Adressierspeicher ADS den Matrixspeicher MS adressiert und damit das darzustellende-Zeichen spaltenweise aus dem Matrixspeicher abruft und über eine, später im einzelnen beschriebene Verarbeitungs- und Erkennungsanordnung den akustooptischen Ablenker AO ansteuert.

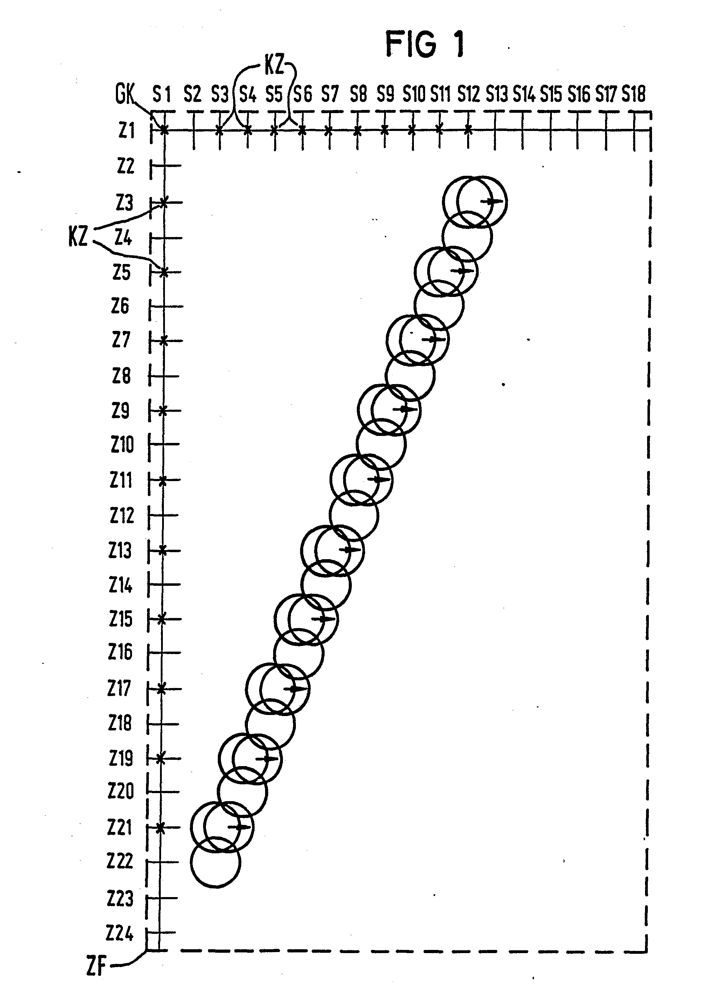

In dem Matrixspeicher MS sind nun die einzelnen darzustellenden Zeichenelemente in Zeichenfelder ZF (Fig. 1) gleicher Größe in Form von Binärzeichen gespeichert. Ein Zeichenfeld hat z.B für ein Zeichen der Größe 1/10 x 1/6 Zoll eine Auflösung von 18 x 24 Punkten was 432 Speicherstellen entspricht, die in der Fig. 1 den Kreuzungspunkten der Zeilen und Spalten Koordinaten Z1 bis Z24 und S1 und S18 entsprechen. Das dargestellte Zeichen "Schrägstrich" ist durch die Belegung der entsprechenden Speicherstellen innerhalb des Zeichenfeldes ZF definiert. Um nun eine Optimierung des Schriftbildes und damit eine Glattung des dargestellten "/" unter Verhinderung von Abstufungen zu erreichen, können einzelne Zeichenelemente, in diesem Falle, die Zeichenelemente mit den Koordinaten S12, Z3; S11, Z5; S10, Z7; etc. dadurch ausgedruckt werden, daß über die mit dem Matrixspeicher verknüpfte Steueranordnung AS eine verzögerte Ansteuerung des akustooptischen Abtasters AO erfolgt, womit sich eine Verschiebung dieser Zeichenpunkte z. B. um eine halbe Zeichenteilung ergibt.

Um diese Verschiebung einfach bewerkstelligen zu können, sind die einzelnen darzustellenden Zeichen innerhalb des Matrixspeichers als zwei Gruppen von Zeichenfeldern ZF gespeichert, die danach unterschieden werden, ob in dem Zeichenfeld Zeichenelemente gespeichert sind, die über die Schaltungsanordnung verschoben und damit korrigiert werden sollen. Dies wird bei den Zeichenfelder durch die Belegung mit einem Gruppenkennzeichen GK an der Koordinatenstelle Z1, S1 des Zeichenfeldes ZF bewerkstelligt. Dabei bezeichnet eine Belegung mit einer "binären" Eins an der beschriebenen Stelle ein Zeichenfeld, das zu korrigierende Zeichenelemente enthält. Eine Belegung mit "Null" entspricht danach einem Zeichenfeld ohne zu korrigierende bzw. zu verschiebende Zeichenelemente.

Eine derartige Kennzeichnung der Zeichenfelder über ein als "Gruppenkennzeichen" bezeichnetes Kennzeichnungsbit ermöglicht es innerhalb eines Zeichensatzes mit einer entsprechend der Erfindung modifizierten Druckersteuerung Zeichen drucken zu können, die innerhalb des Zeichenfeldes auch die erste Zeile und die erste Spalte belegen. Eine derartige Belegung ist z. B. notwendig, wenn Zeichen gedruckt werden sollen, die sich über mehrere Zeichenfelder erstrecken z. B. durchgehende Striche oder ähnliches. Es ist deshalb bei einer derartigen Belegung des Zeichenfeldes allein notwendig, den durch die Koordineten Z1 und S1 definierte erste Speicherzelle für das Gruppenkennzeichen frei zu halten. Um bedarfsweise in Sonderfällen auch diesen Speicherplatz als Speicherplatz für ein Zeichenelement benutzen zu können, ist es auch möglich, das Gruppenkennzeichen außerhalb des Zeichenfeldes in eine separaten Register abzuspeichern. Dies führt jedoch zu einer geringfügigen Erhöhung des Speicherplatzbedarfes.

Bei dem in der Fig. 1 dargestellten Beispiel bei dem innerhalb des Zeichenfeldes zu korrigierende Zeichenelemente abgespeichert sind, sind zur Kennzeichnung dieser durch Verschiebung zu korrigierenden Zeichenelemente in der ersten Spalte und der ersten Zeile des Zeichenfeldes als "Kennungszeichen" bezeichnete Kennungsbits abgespeichert. Durch die Belegung mit diesen Kennungsbits in der ersten Spalte und der ersten Zeile kann der nachgeschalteten Druckersteuerung mitgeteilt werden, daß die in den Kreuzungspunkten der Kennungsbits liegenden Punkte - in diesem Fall um eine halbe Teilung versetzt - zeitlich später gedruckt werden sollen. Bei dem dargestellten Beispiel sind die Zeichenfelder so organisiert, daß pro Spalte S1 bis S18 nur jeweils maximal ein einzelnes Zeichenelement abgespeichert ist. Dadurch ist es in diesem Falle möglich, die Kennungszeichen (Kennungsbit) allein in der ersten Zeile Z1 abzuspeichern, ohne daß es dabei zu Mehrdeutigkeiten innerhalb des Zeichenfeldes ZF kommt. Sollen Zeichenfelder verwendet werden, bei dem pro Spalte mehrere Zeichenelemente abgespeichert sind, so kann dies unter Umständen zu einer nicht erwünschten Korrektur eines Randpunktes führen. In diesem Fall muß auf eine Korrektur des Punktes verzichtet werden, was wiederum bei der Erstellung der Zeichenform und der zugehörigen Korrekturstellen berücksichtigen kann.

In dem dargestellten Beispiel werden zur Kennzeichnung der zu korrigierenden Zeichenelemente die Kennungsbits in der Zeile Z1 angeordnet. Selbstverständlich ist es auch möglich, die Kennungsbits in der Spalte S1 anzuordnen oder aber bei der Verwendung von Zeichenfeldern bei denen pro Spalte mehrere Zeichenelemente angeordnet- sind, sowohl die erste Spalte als auch die erste Zeile gemeinsam als Speicherplätze für die Kennungszeichen zu verwenden. Eine Korrektur der Zeichenelemente durch Verschieben ist sowohl in Zeilenrichtung als auch in Spaltenrichtung möglich.

Im folgenden wird nun anhand der Fig. 2 die Funktion der Schaltungsanordnung im einzelnen beschrieben.

Zur Ansteuerung des akustooptischen Ablenkers AO wird mit Hilfe der Adressier- und Steuereinrichtung AS aus dem Matrixspeicher MS das darzustellende Zeichen spaltenweise ausgelesen. Dieses Auslesen erfolgt im Takte eines Spaltentaktes der von der Adressier- und Steuereinheit AS erzeugt wird und dessen Frequenz von der angestrebten Schreibgeschwindigkeit abhängt. Beim Auslesen eines Zeichens aus dem Matrixspeicher wird zunächst das entsprechende Zeichenfeld ZF adressiert und an alle 24 Bits der erste Spalte S1 des Zeichenfeldes in ein erstes Spaltenregister ES übernommen. Ein gesetztes Bit an der Stelle ES1 des ersten Spaltregisters, kennzeichnet, daß im Zeichenfeld ZF gespeicherte und abzudruckende Zeichen zu korrigierende Zeichenelemente enthält. Erkannt wird dieses "Korrigierbit" über eine Und-Verknüpfung U1 die die Speicherstelle Z1 des ersten Spaltregisters ES mit dem das erste Spaltregister ES ansteuernden Spaltentakt verknüpft. Nach Abspeicherung der ersten Spalte des Zeichenfeldes im ersten Spalteregister ES werden über die Adressier- und Steuereinheit zwei in Verbindung mit dem Matrixspeicher sich befindlichen Druckregister DR und VR gesetzt. Die Druckregister DR und VR sind ausgangsseitig mit dem akustooptischen Ablenker AO verknüpft und dienen als Zwischenspeicher. Durch die Belegung des ersten Spaltregisters ES an der Stelle ES1 mit einer binären "1" wird angezeigt, daß sich in der ersten Zeile des Zeichenfeldes ZF keine Druckinformation befindet.

Mit dem zweiten Spaltentakt wird aus dem im Matrixspeicher MS gespeicherten Zeichenfeldes ZF die zweite Spalte S2 ausgelesen und in die Druckregister DR und VR übernommen.

Dabei entsprechen die Druckregister DR und VR in ihrem Aufbau und in ihrer Größe dem ersten Spaltregister ES.

Abhängig davon nun ob das in den Druckregistern DR und VR gespeicherte Zeichenelement verzögert, d.h. korrigiert werden soll oder nicht, wird nun entweder das Druckregister DR oder das verzögerte Druckregister VR über die Adressier- und Steuereinheit AS angesteuert. Dabei erfolgt die Ansteuerung des verzögerten Druckregisters VR zeitversetzt gegenüber der Ansteuerung des Druckregisters DR und zwar um eine Zeit die etwa einer halben Spaltenbreite entspricht, so daß sich die in der Fig. 1 durch Pfeile dargestellte Verschiebung der zu korrigierenden Zeichenelemente ergibt. Die Entscheidung darüber, welches der beiden Druckregister DR und VR gesetzt und damit dessen Inhalt dem akustooptischen Ablenker übermittelt werden soll, erfolgt durch einen Vergleich des Inhaltes des ersten Speicherplatzes des verzögerten Druckregisters VR, VR1 mit dem Inhalt des Speicherregisters Z1 des ersten Spaltregisters ES über die Undverknüpfung U2. Enthält die in den Druckregistern DR und VR gespeicherte Spalte ein zu korrigierendes Zeichenelement, so ist das Kennungszeichen im Speicherplatz VR1 und DR1 mit einer binären "Eins" belegt. Da in diesem Fall gleichzeitig das erste Spaltregister in seinem ersten Speicherplatz ES1 mit einer binären "Eins" belegt ist und damit anzeigt, daß es sich bei dem aufgerufenen Zeichenfeld ZF um ein Zeichenfeld mit zu korrigierenden Zeichen handelt, wird zum Abdruck allein das verzögerte Druckregister VR betätigt. Danach werden z. B. über einen allgemein üblichen internen Spaltenzähler im Takte des Spaltentaktes die Spalteadressen um einen Zähler erhöht und damit die nächste Spalte aus dem aufgerufenen Zeichenfeld ZF des Matrixspeichers MS abgerufen. nach Abspeicherung der ersten Spalte um im ersten Spalteregister über die Umverbindung U1 festgestellt, daß es sich um ein Zeichenfeld handelt, bei dem kein zu korrigierendes Zeichenelement enthalten ist, so ist die Speicherstelle ES1 des ersten Spaltregisters ES für die Dauer des Auslesen des Zeichenfeldes mit einem Binärzeichen entsprechend logisch "Null" belegt. Damit erfolgt die Ansteuerung des akustooptischen Ablenkers AO allein über das Druckregister DR wobei ein bei der Abspeicherung der ersten Spalte des Zeichenfeldes erkanntes Binärzeichen "EINS" als Druckinformation für ein Zeichenelement in dieser ersten Spalte gedeutet wird. Bis auf das erste Zeichen der ersten Spalte und der ersten Zeile des Zeichenfeldes ZF werden nun auch alle an der Stelle DR1 des Druckregisters DR abgespeicherten und damit aus der ersten Zeile des Zeichenfeldes entnommenen Bits als Druckinformationen gedeutet.

Bei den dargestellten Beispielen erfolgt das Beschreiben der Druckregister parallel für alle 24 Zeichenpunkte einer Spalte. Selbstverständlich kann dies auch in Untermengen oder seriell erfolgen.

Bei Matrixdruckern bei den die Horizontalschreibfrequenz ohne Probleme erhöht werden kann, wie dies z. B. bei Laserdruckern der Fall ist, ist durch die Kombination von einem verzögerten und einem normal abgedruckten Punkt die Strichbreite auch in Zwischengrößen, z. B. 1 1/2, 2 1/2 etc. Punktgrößen wählbar. Dadurch ist eine optimale Anpassung an maschinenlesbare Druckzeichen oder eng tolerierte Zeichen wie Bar-Code leichter zu erreichen.

**Patentansprüche**

1. Schaltungsanordnung zum Erzeugen von Zeichen oder graphischen Mustern über Ausgabeeinheiten von Mosaikdruckeinrichtungen oder nach dem Rasterprinzip arbeitenden Geräten, bei denen ein Aufzeichnungsmittel (L) zum Erzeugen von Bildpunkten zeilenweise entlang eines Aufzeichnungsträgers (AT) bewegt wird, mit einem Matrixspeicher (MS) in dem die einzelnen Zeichen als strich- oder musterbeschreibende binäre Zeichenfolgen einzeln in matrixartig aufgebauten Zeichenfeldern (ZF) gleicher Größe als spalten- bzw. zeilenweise angeordnete Zeichenelemente binär gespeichert sind und mit einer Adressier- und Steuereinheit (AS), die die binär gespeicherten Zeichenelemente aus dem Matrixspeicher (MS) ausliest und in die Ansteuersignale für das Aufzeichnungsmittel umsetzt und bedarfsweise über eine Verzögerungseinrichtung einen verschobenen Bildpunkt erzeugt,
dadurch gekennzeichnet,
daß Gruppenkennzeichen (GK) aufweisende erste und zweite Gruppen von Zeichenfeldern (ZF) vorgesehen sind, wobei der ersten Gruppe von Zeichenfeldern durch Kennungszeichen (KZ) gekennzeichnete verschiebbare Zeichenelemente und der zweiten Gruppe von Zeichenfeldern nicht verschiebbare Zeichenelemente zugeordnet sind und daß eine die Gruppenkennzeichen (GK) und die Kennungszeichen (KZ) erfassende und in Ansteuersignale für die Adressier- und Steuereinheit (AS) umsetzende Erkennungsanordnung (U1, U2) vorgesehen ist, so daß beim Auslesen eines zu verschiebenden Zeichenelementes aus dem Matrixspeicher (MS) eine gegenüber der Ansteuerung des Aufzeichnungsmittel beim Auslesen eines nicht zu korrigierenden Zeichens verzögerte Ansteuerung des Aufzeichnungsmittels (AO) und damit eine entlang der Zeile und/oder Spalte verschobene Bildpunkterzeugung erfolgt.

2. Schaltungsanordnung nach Anspruch 1, dadurch gekennzeichnet, daß als Gruppenkennzeichen (GK) das erste Binärzeichen der ersten Zeile und Spalte des Zeichenfeldes (ZF) dient.

3. Schaltungsanordnung nach einem der Ansprüche 1 oder 2, dadurch gekennzeichnet, daß als Kennungszeichen (KZ) die Binärzeichen der ersten Zelle und/oder Spalte der Zeichenfelder (ZF) vorgesehen sind.

4. Schaltungsanordnung nach einem der Ansprüche 1 bis 3, dadurch gekennzeichnet, daß in den Zeichenfeldern (ZF) je Spalte höchstens ein Zeichenelement binär gespeichert ist, wobei als Kennungszeichen (KZ) die Binärzeichen der ersten Zeile jeder Spalte dienen, daß ein erstes mit dem Aufzeichnungsmittel (AO) in Verbindung stehendes Druckregister (DR) und ein zweites verzögerungsdruckregister (VR) vorgesehen sind und daß zum Abdruck eines zu Verschiebenden Zeichenelementes das Verzögerungsdruckregister (VR) über die Adressier- und Steuereinheit angesteuert wird.

5. Schaltungsanordnung nach Anspruch 4, dadurch gekennzeichnet, daß ein die ersten Spalten jedes Zeichenfeldes (ZF) beim Auslesen zwischenspeicherndes Spaltenregister (ES) vorgesehen ist und daß dem Spaltenregister (ES) eine logische Anordnung zur Erkennung des Gruppenkennzeichens (GK) zugeordnet ist.

**Claims**

1. A circuit arrangement for producing characters or graphic patterns via output units of mosaic printers or devices operating in accordance with the raster principle, in which a recording means (L) is moved row by row along a data carrier (AT) in order to produce image points, with a matrix store (MS) in which the individual characters are stored in binary form, as binary character sequences, descriptive of lines or patterns, individually in equal size character arrays (ZF) of matrix-like construction, as character elements arranged in columns and rows, and with an addressing and control unit (AS) which reads the character elements, stored in binary form, from the matrix store (MS), converts said character element into the drive signals for the recording means, and as and when necessary produces a displaced image point via a delay device, characterised in that first and second groups of character arrays (ZF), provided with group identification characters (GK), are provided, where the first group of character arrays are assigned displaceable character elements, characterised by code characters (KZ), and the second group of character arrays are assigned non-displaceable character elements, and that a recognition arrangement (U1, U2) is provided which detects the group identification characters (GK) and the code characters (KZ), and converts these into drive signals for the adressing and control unit (AS), so that when a character element, which is to be displaced, is read from the matrix store (MS), the recording means (AO) is driven in delayed fashion in relation to the drive of the recording means when a character which is not to be corrected is read out, and thus there is a displaced formation of the image point along the row and/or column.

2. A circuit arrangement as claimed in claim 1, characterised in that the first binary character of the first row and column of the character array (ZF) serves as group identification character (GK).

3. A circuit arrangement as claimed in one of the claims 1 or 2, characterised in that the binary characters of the first row and/or column of the character arrays (ZF) are provided as code characters.

4. A circuit arrangement as claimed in one of the claims 1 to 3, characterised in that a maximum of one character element is stored in binary form in the character arrays (ZF) in respect of each column, where the binary characters of the first row of each column serve as code characters (KZ), that a first printer register (DR), connected to the recording means (AO), and a second delay printer register (VR) are provided, and that in order to print a character element which is to be displaced, the delay printer register (VR) is driven via the addressing and control unit.

5. A circuit arrangement as claimed in claim 4, characterised in that a colunn register (ES) is provided which intermediately stores the first columns of each character array (ZF) during the read-out procedure and that the column register (ES) is assigned a logic arrangement which recognises the group identification character (GK).

**Revendications**

1. Montage pour produire des caractères ou des dessins graphiques au moyen d'unités de sortie de dispositifs d'impression en mosaïque ou d'appareils fonctionnant selon le principe d'une grille, dans lesquels un moyen de traçage (L) est déplacé ligne par ligne le long d'un support d'inscription (AT) pour y former des points, montage qui comporte une mémoire matricielle (MS) où les différents caractères sont individuellement mémorisés en binaire comme des suites de caractères binaires, décrivant des traits ou des dessins, dans des zones à caractères (ZF) de construction matricielle et de même grandeur, pour y constituer des éléments de caractère disposés suivant des colonnes et des lignes, ainsi qu'une unité d'adressage et de commande (AS) qui extrait les éléments de caractère mémorisés en binaire de la mémoire matricielle (MS), les transforme en signaux de commande pour le moyen de traçage et produit, si nécesaire, un point décalé par un dispositif à retard, caractérisé en ce qu'il comprend un premier et un second groupe de zones à caractères (ZF), présentant des identificateurs de groupe (GK), avec coordination au premier groupe de zones à caractères d'éléments de caractère déplaçables, repérés par des marqueurs (KZ), et avec coordination au second groupe de zones à caractères d'éléments de caractère non déplaçables, et qu'il comprend un dispositif de reconaissance (U1, U2) qui détecte les indicaterurs de groupe (GK) et les marqueurs (KZ) et les transforme en signaux de commande pour l'unité d'adressage et de commande (AS), de manière qu'à l'extraction de la mémoire matricielle (MS) d'un élément de caractère à décaler, la commande du moyen de traçage (AO) soit retardée, comparativement à la commande du moyen de traçage à l'extraction d'un élément de caractère qui n'est pas à décaler, et que, de ce fait, le point formé soit décalé le long de la ligne et/ou de la colonne.

2. Montage selon la revendication 1, caractérisé en ce que le premier caractère binaire de la première liqne et de la première colonne de la zone à caractère (ZF) sert d'identificateur de groupe (GK).

3. Montage selon la revendication 1 ou 2, caractérisé en ce que les caractères binaires de la première ligne et/ou de la première colonne des zones à caractères (ZF) sont prévus comme marqueurs (KZ).

4. Montage selon une des revendications 1 à 3, caractérisé en ce que tout au plus un élément de caractère est mémorisé en binaire par colonne dans les zones à caractères (ZF), avec utilisation des caractères binaires de la première ligne de chaque colonne comme marqueurs (KZ), que le montage comprend un premier registre d'impression (DR) en liaison avec le moyen de traçage (AO) et un second registre d'impression (VR) qui est un registre à retard, et que l'unité d'adressage et de commande actionne le registre d'impression à retard (VR) pour l'impression d'un élément de caractère à décaler.

5. Montage selon la revendication 4, caractérisé en ce qu'il comprend un registre à colonnes (ES) pour la mémorisation temporaire des premières colonnes de chaque zone à caractères (ZF) lors de l'extraction, et qu'un dispositif loqique pour la reconnaissance de l'identificateur de groupe (GK) est coordonné à ce registre à colonnes (ES).

7

# FIG 1

## FIG 2